# EUROPEAN PATENT APPLICATION

(11) **EP 1 583 006 A2**
(43) Date of publication of application: **05.10.2005**
(21) Application number: 05251900.6
(22) Date of filing: 29.03.2005
(51) Int. Cl.: G06F 17/30

(54) **Method for managing multimedia data files**

(30) Priority: 02.04.2004 US 558552 P; 18.06.2004 KR 2004045451; 19.08.2004 KR 2004065520
(71) Applicant: SAMSUNG ELECTRONICS CO., LTD., Gyeonggi-do (KR)
(72) Inventor: Choi, Hyok-sung, Dongan-gu, Anyang-si, Gyeonggi-do (KR); Shin, Seong-Kook, Seocho-gu Seoul (KR); Lee, Tae-Hun, Suwon-si, Gyeonggi-do (KR)
(74) Representative: Robinson, Ian Michael

(57) **Abstract**

A method for managing multimedia data includes: (a) allowing a user to access a multimedia object including at least one multimedia data file; (b) checking a reference relation of the multimedia data file when the multimedia object is deleted; and (c) deleting the multimedia data file when the multimedia data file is referenced only by the multimedia object, or maintaining the multimedia data file when the multimedia file is referred to by another object as well as the multimedia object.

## Description

The present invention relates to a method for managing multimedia data, and more particularly to a method for consistently maintaining link states between a multimedia object and at least one kind of multimedia data included in the multimedia object by recording link information on at least two multimedia objects making reference to the same multimedia data in a separated file.

As signal processing and telecommunication techniques have been developed, various types of text data, image data, audio data, or video data (hereinafter, referred to as "multimedia data") have been used for various application fields.

Further, some application fields use not only a single type of multimedia data but also integrated multimedia data having at least two types of multimedia data mixed and related with each other.

For example, a user creates image data by using a digital camera and stores the created image data and audio data with music according to the user's preference in a compact disk (CD). After that, the user can play the CD by means of a CD player. The user may want that the music stored in the CD is played as background music for the user's photographed image. To this end, integrated multimedia data, in which image data are logically mixed with audio data, can be produced.

In the meantime, hereinafter, a unit object, including a single type of multimedia data or integrated multimedia data, is called "multimedia object". That is, it can be said that one multimedia object refers to data including one type or at least two types of multimedia data. Additionally, the multimedia object can be linked with multimedia data using location information (e.g., a file name and a path name of the multimedia data).

Meanwhile, as methods for providing various types of multimedia contents to users using a multimedia object, there are a MusicPhotoVideo (hereinafter, referred to as "MPV") standard and a High-performance Media Access Technology (hereinafter, referred to as "HiMAT") standard.

The MPV standard has been suggested by the Optical Storage Technology Association (OSTA), and the HiMAT standard has been suggested by Microsoft Corporation in U.S. These standards provide methods for enabling products dealing with multimedia contents to share, exchange, and process the multimedia contents with each other and to be linked to the Internet.

The MPV standard represents multimedia contents as metadata based on an Extensible Markup Language (hereinafter, referred to as "XML"). The XML allows multimedia contents to be shared and exchanged.

The HiMAT standard represents multimedia contents as metadata based on a specific binary format relatively easily realized.

However, in realizing functions such as exchange of multimedia contents, change, copy, deletion of metadata, such metadata make it difficult to consistently maintain link states between a multimedia object and multimedia data included in the multimedia object. The difficulty will be described below by using the MPV standard based on the XML.

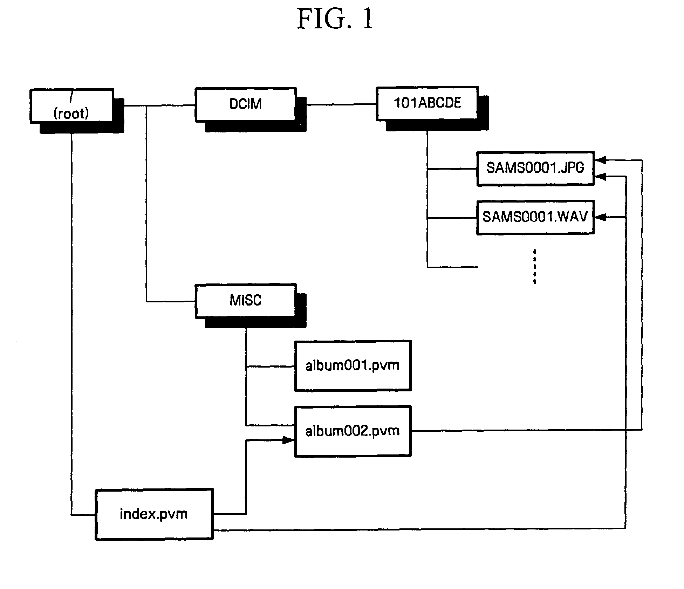

Figure 1 illustrates a structure of an MPV link.

In the MPV standard, a multimedia object is called "asset", and the asset is defined and described in an MPV file having ".pvm" as an extension. Multimedia data included in the asset are referenced as a form of metadata. Also, a plurality of assets are included in the MPV file.

In the structure of the link shown in FIG. 1, a file "/DCM/101ABCDE/SAMS0001.JPG" is simultaneously linked with "index.pvm" and "album002.pvm". Such a link structure can be generally created through the MPV standard. If the "SAMS0001.JPG" file is deleted or moved into another directory, and then, if assets making reference to the "SAMS0001.JPG" file in an MPV file (herein, the MPV file corresponds to "index.pvm" and "album002.pvm" having an extension ".pvm" ) are performed, problems occur.

For example, "asset_1" with a "Still" type, which makes reference to a single image data (herein, a SAMS0001.JPG file), is described in the "album002.pvm" file. Also, "asset_2" with a "StillWithAudio" type, in which a single image data and a single audio data (herein, a SAMS0001.JPG file and a "SAMS0001.WAV" file) are mixed, is described in the "index.pvm" file. Herein, contents about a type of an asset are presented in the MPV standard, and a detailed description about the MPV standard can be accessed via an official OSTA web site (www. osta.org).

If a user executes the "album002.pvm" file by means of an application capable of executing the MPV file, and then, deletes the "asset_1", the "SAMS0001.JPG" file referred to by the "asset_1" is deleted. In the case of a normal operation, when a user executes the "asset_2" after the index.pvm file, the "asset_2" makes reference to the "SAMS0001.JPG" file and the "SAMS0001.WAV" file, so that multimedia contents with a "StillWithAudio" type have to be provided to the user. However, since the SAMS0001.JPG file has been already deleted, the user gets an error message, or only the SAMS0001.WAV file is executed, so that the user obtains unintended results.

Thus, when a plurality of assets refer to multimedia data, link states between the assets and multimedia data included in the assets may be incorrectly described, thereby yielding an undesired result as in the above example. This is because the link states are described only in a direction in which the assets make reference to the multimedia data. Also, the multimedia data referred to by the assets may be searched for all the assets. However, this method is very inefficient.

Recently, a "WinFS" technology has been provided in order to solve the above-described problems. The WinFS technology employs combination of a DataBase Management System (DBMS) technology based on the XML and a file system technology. Accordingly, the WinFS technology allows a personal computer (hereinafter, referred to as a "PC") to efficiently search for and manage various types of information. Also, the WinFS technology provides an environment in which a link relation for all information can be consistently maintained. Therefore, when various assets (called "item" in the WinFS) are processed under such a WinFS environment, logical links can be efficiently managed, updated and maintained.

However, the WinFS is based on a PC software environment such as DBMS, NTFS (NT File System), etc. Therefore, it is difficult to employ the WinFS for a system with restriction of system resources such as storage capacity, a central processing unit (CPU), etc.

Accordingly, a method for consistently maintaining link states between multimedia objects and multimedia data even under an environment having limited system resources is required.

Illustrative, non-limiting embodiments of the present invention overcome the above disadvantages and other disadvantages not described above. Also, the present invention is not required to overcome the disadvantages described above, and an illustrative, non- limiting embodiment of the present invention may not overcome any of the problems described above.

According to the present invention there is provided an apparatus and method as set forth in the appended claims. Preferred features of the invention will be apparent from the dependent claims, and the description which follows.

According to aspect of the present invention, a method is provided for consistently maintaining link states between a multimedia object and one or more multimedia data included in the multimedia object by recording link information for two or more multimedia objects making reference to the same multimedia data in a separated file.

According to an exemplary embodiment of the present invention, there is provided a method for managing multimedia data comprising: (a) allowing a user to access a multimedia object including at least one multimedia data file; (b) checking a reference relation of the multimedia data file when the multimedia object is deleted; and (c) deleting the multimedia data file when the multimedia data file is referenced only by the multimedia object, or maintaining the multimedia data file when the multimedia file is referred to by another object as well as the multimedia object.

According to another exemplary embodiment of the present invention, a method for managing multimedia data comprising the steps of: (a) allowing a user to access a multimedia object including at least one multimedia data file; (b) changing information on the multimedia object; and (c) updating reference relation of the multimedia data file by means of changed information.

According to a still another exemplary embodiment of the present invention, a method is provided for managing multimedia data comprising: (a) allowing a user to create a multimedia object including at least one multimedia data; and (b) adding information on the created multimedia object to reference relation of the multimedia data file when the multimedia data file is referred to by another multimedia object as well as the created multimedia object.

According to a still further exemplary embodiment of the present invention, a method for managing multimedia data comprising: (a) allowing a user to create a multimedia object including at least one multimedia data; and (b) creating a file for recording reference relation of the multimedia data file when the multimedia data file is referred to by another multimedia object as well as the created multimedia object.

The above and other aspects of the present invention will be more apparent by describing in detail illustrative, non-limiting embodiments thereof with reference to the accompanying drawings, in which:
Figure 1 illustrates a structure of an MPV link;
Figure 2 illustrates a link structure of an MPV standard for explaining a method for processing multimedia data according to an exemplary embodiment of the present invention;
Figure 3 is a block diagram according to an exemplary embodiment of the present invention;
Figure 4 is a flowchart showing a procedure of creating a link information file, or adding new link information to a link information file according to an exemplary embodiment of the present invention;
Figures 5(A), 5(B) and 5(C) show an ".mtd" file format and an "MPV" file format according to an exemplary embodiment of the present invention;
Figure 6 is flowchart showing a process of updating a link information file according to an exemplary embodiment of the present invention; and
Figure 7 is a flowchart showing a process of deleting a link information file according to an exemplary embodiment of the present invention.

Hereinafter, exemplary embodiments of the present invention will be described in detail with reference to the accompanying drawings.

Advantages and features of the present invention, and methods for achieving them will be apparent to those skilled in the art from the detailed description of the exemplary embodiments together with the accompanying drawings. However, the scope of the present invention is not limited to the exemplary embodiments disclosed in the specification, and the present invention can be realized in various types. The described exemplary embodiments are presented only for completely disclosing the present invention and helping those skilled in the art to completely understand the scope of the present invention, and the present invention is defined only by the scope of the claims. Additionally, the same reference numerals are used to designate the same elements throughout the specification and drawings.

The present invention is described hereinafter with reference to flowchart illustrations of methods according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

For the purpose of easy explanation, exemplary embodiments of the present invention will be described below based on protocols and definitions suggested in the MPV standard.

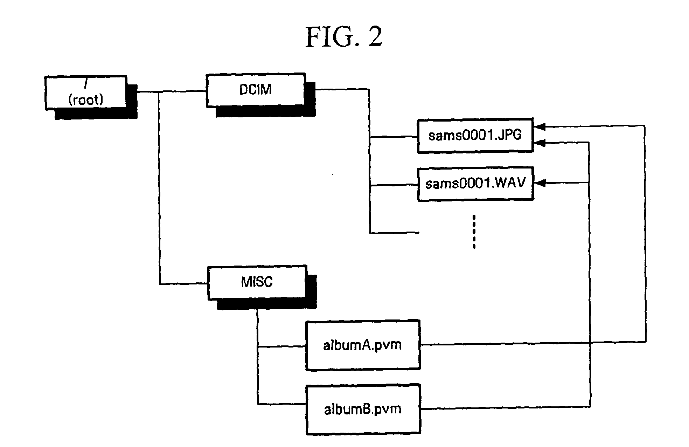

Figure 2 illustrates a link structure of an MPV standard for explaining a method for processing multimedia data according to an exemplary embodiment of the present invention.

According to the sequence of creating link structure, a user makes an "albumA" file, and then, creates an asset having a characteristic of "mpv_id = asset_1" in the "albumA" file. Herein, the mpv_id represents information for identifying an asset in the MPV standard. An asset type of the asset_1 is a "Still" asset defined in the MPV standard, and the asset makes reference to a "sams0001.jpg" file including image data.

After that, the user makes an "albumB" file, and then, creates an asset having a characteristic of "mpv_id = asset_2" in the album B. Herein, an asset type of the asset_2 is a "StillWithAudio" asset defined in the MPV standard. Also, the asset_2 includes an asset (mpv_id=dog0) making reference to the "sams0001.jpg" file having image data and an asset (mpv_id=bark0) making reference to a "sams0001.wav" file having audio data. That is, the StillWithAudio asset represents image data mixed with audio data.

In other words, as shown in Figure 2, the "sams0001.jpg" file is referred to by the asset_1 of the "albumA" file and the asset_2 of the "albumB".

Further, it is possible to determine rules for naming assets and representing files (hereinafter, the files have an extension ".mtd" and are called "mtd files") recording link information between the asset and multimedia data referred to by the asset.

### 1. A rule for naming an asset

(1) Assets have independent file names. That is, assets are not allowed to have the same file name, or the same file name with different extensions.
(2) Multimedia data files referred to by each asset have the same file name with different extensions. Herein, the file name is called "representative file name". However, if there is an asset having a plurality of files with the same format, a file name of a first file of the asset is the representative file name. Additionally, file names of files with different formats or different extensions are identical to the representative file name.
(3) When another asset refers to multimedia data which are referred to by a predetermined asset recorded in an MPV file (for example, an MPV file with an extension ".pvm" ), an mtd file is created. However, when the multimedia data are not referred to, the mtd file is not created. In other words, the mtd file is created when multimedia data are referred to by at least two assets. At this time, a file name of the mtd file is identical to the representative file name.

### 2. A rule for representing the mtd file

(1) Information on MPV files making reference to corresponding assets is recorded in the mtd file.
(2) Information on MPV files can be represented as an XML form or a text form.
(3) Information on MPV files may include path of the MPV file locations, file names of the MPV files, and information for identifying the asset. Also, if necessary, information on the MPV files includes additional information.
(4) When a corresponding asset is deleted, the mtd file is deleted.

Hereinafter, a method for processing multimedia data according to an exemplary embodiment of the present invention will be described depending on the structure of the link shown in Figure 2 and the above-described rules.

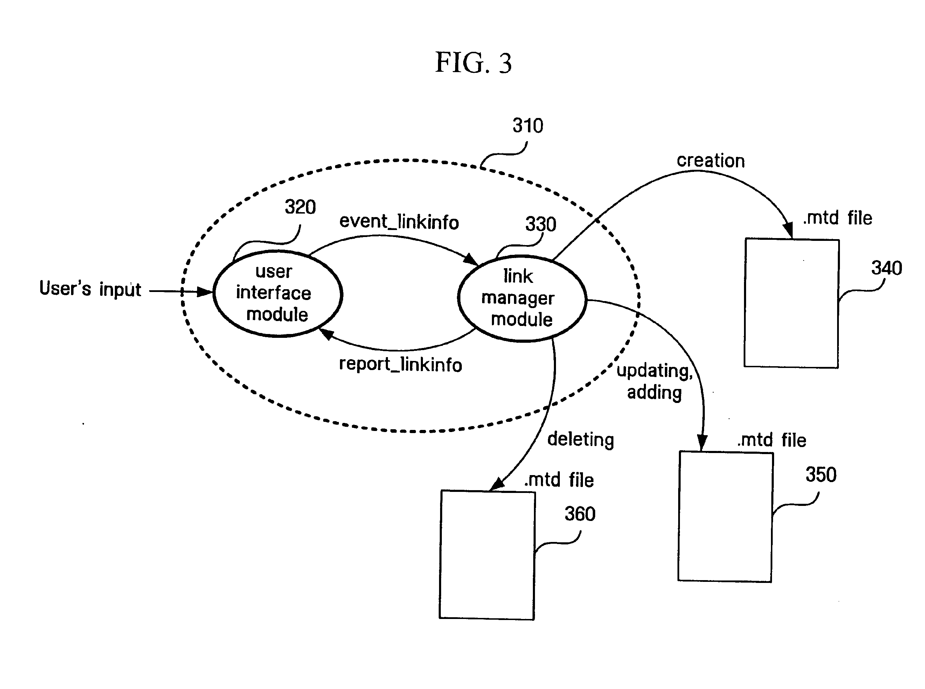

Figure 3 is a block diagram according to an embodiment of the present invention. An application module 310 for managing assets of the MPV standard, which are multimedia objects, includes a user interface module 320 and a link manager module 330.

The user interface module 320 provides a user with an interface for managing assets.

The link manager module 330 manages link states between assets and multimedia data included in the assets by using asset management information (for example, creation of an asset, deletion of an asset, etc.) received from the user interface module 320.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, micro-code, circuitry, data, databases, data structures, tables, arrays, and variables. The functionality provided for in the components and modules may be combined into fewer components and modules or further separated into additional components and modules.

Hereinafter, a detailed description about an operation performed between modules will be given.

When a user intends to manage assets, the application module 310 for managing the assets makes the user interface module 320 operated, thereby providing the user with a user interface for managing the assets. Herein, the application module 310 can operate as a daemon.

In the meantime, when the user intends to manage assets, the user may create new assets, change existing asset information, or delete existing assets.

When the user selects an intended asset management function through the provided user interface, the user interface module 320 generates an event_linkinfo event, thereby activating the link manager module 330. The activated link manager module 330 performs a required operation depending on the asset management function selected by the user and generates a report_linkinfo event, thereby delivering the result of the required operation to the user interface module 320. After than, the user interface module 320 provides the result of the required operation to the user through the user interface.

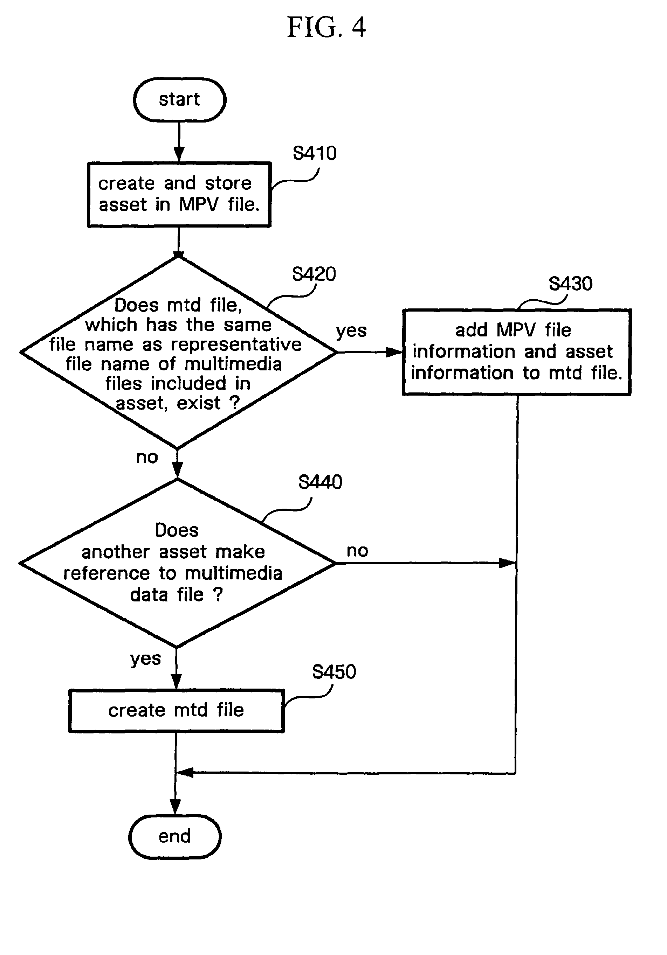

Herein, the link manager module 330 creates a new mtd file 340, updates an existing mtd file 350, adds other information to the mtd file 350, or deletes an existing mtd file 360 according to the asset management functions. Figures 4 to 7 illustrate detailed processes of operations based on the link structure shown in Figure 2.

Figure 4 is a flowchart showing a procedure of creating a link information file or adding new link information to a link information file according to an exemplary embodiment of the present invention.

When a user creates a new "asset_1", the asset_1 is stored in the "albumA" which is an MPV file (S410). At this time, the asset_1 makes reference to "the sams0001.jpg", and "sams0001" becomes a representative file name.

After that, it is determined whether there is an mtd file named as "sams0001" (S420). At this time, the mtd file named as "sams0001" does not exist. Therefore, it is determined whether there is another asset making reference to the "sams0001.jpg" file (S440). Herein, since another asset does not make reference to the "sams0001.jpg" file, the mtd file is not created.

Hereinafter, if a user creates an "asset_2", the asset_2 is stored in the "albumB", which is an MPV file (S410). Since the asset_2 is a "StillWithAudio" asset, the asset_2 includes an asset (mpv_id = dog0) making reference to the "sams0001.jpg" file having image data and an asset (mpv-id=bark0) making reference to the "sams0001.wav" file having audio data. After that, it is determined whether there is an mtd file named as "sams0001" (S420). Herein, the mtd file does not exist yet. Therefore, it is determined whether there is another asset making reference to the "sams0001.jpg" file or the "sams0001.wav" file (S440) In detail, it is determined whether there is another asset making reference to the "sams0001.jpg" file or the "sams0001.wav" file in an MPV file, which is the "albumA" in the present description. However, if the asset_1makes reference to the "sams0001.jpg" file and another asset makes reference to the "sams0001.wav" file, a "sams0001.mtd" file is created so as to record information on a path to the "albumA", a full filename of the "albumA", and an identifier of the "albumA" (S450). Additionally, the "sams0001.mtd" file has information on a path to the "albumB", a full filename of the "albumB", and identification of assets(the asset_2 asset and assets making reference to the "sams0001.jpg" file and the "sams0001.wav" file) (S450).

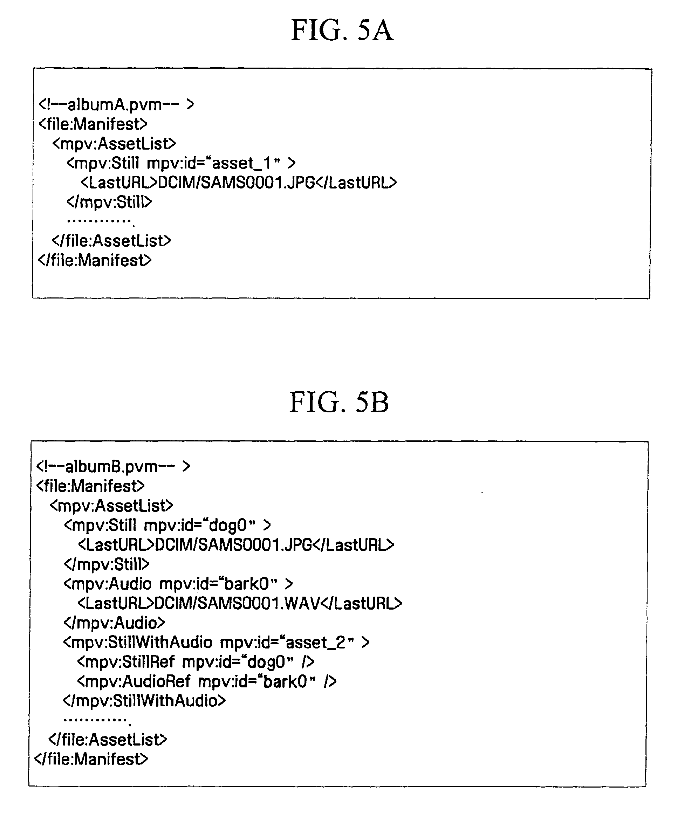

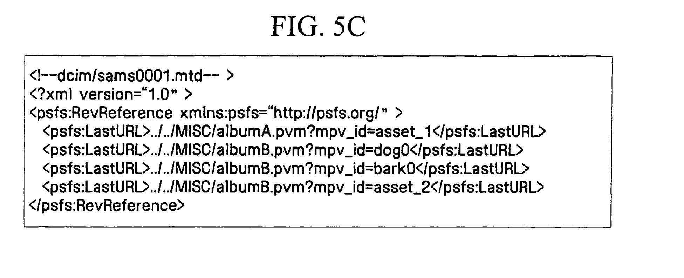

Figures 5(A) to 5(C) show file formats of a "sams0001.mtd" file, the "albumA" file, and the "albumB" file after the "sams0001.mtd" file is created. Herein, Figures 5(A) and 5(B) illustrate the file formats according to the MPV standard, and Figure 5(C) illustrates a file format based on the XML.

Meanwhile, if the "sams0001.mtd" file exists in step S420, identification information on the "albumA" and the asset_1, which is "mpv_id" defined in the MPV standard, is additionally recorded in the "sams0001.mtd" (S430). Preferably, identification information on the "albumA" includes a path name and a file name of "albumA.pvm".

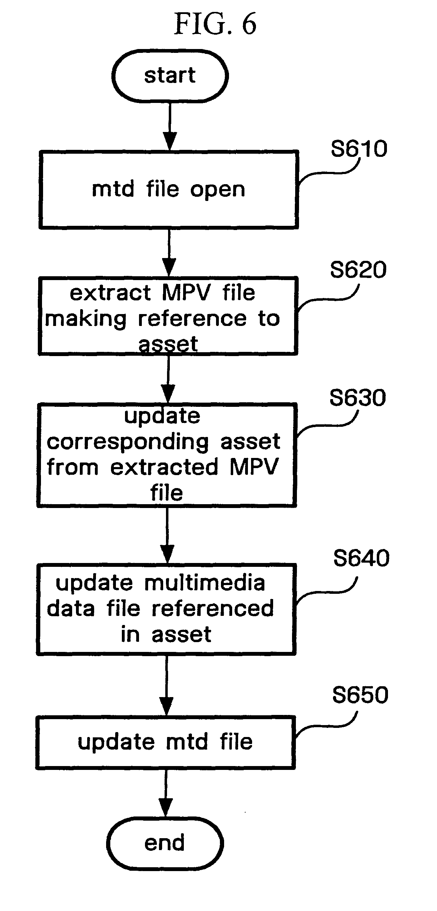

Figure 6 is a flowchart showing a process of updating a link information file according to an exemplary embodiment of the present invention.

If a user wishes to change "mpv:id="asset_2"" to "mpv:id= "asset_3"" in the "albumB" shown in Figure 5B, the "sams0001.mtd" file is opened (S610), and then, an "albumB.pvm" file making reference to the asset_2 is extracted from the sams0001.mtd file (S620). After that, the value of "mpv:id" in the extracted "albumB.pvm" is changed from "asset_2" to "asset_3" (S630). If a user wishes to change a file name of multimedia data referred to by the asset_2, the file name of the multimedia data can be changed (S640).

After the "albumB.pvm" file is updated, 'mpv_id=asset_2' is updated to 'mpv_id=asset_3' in the "sams0001.mtd" file (S650).

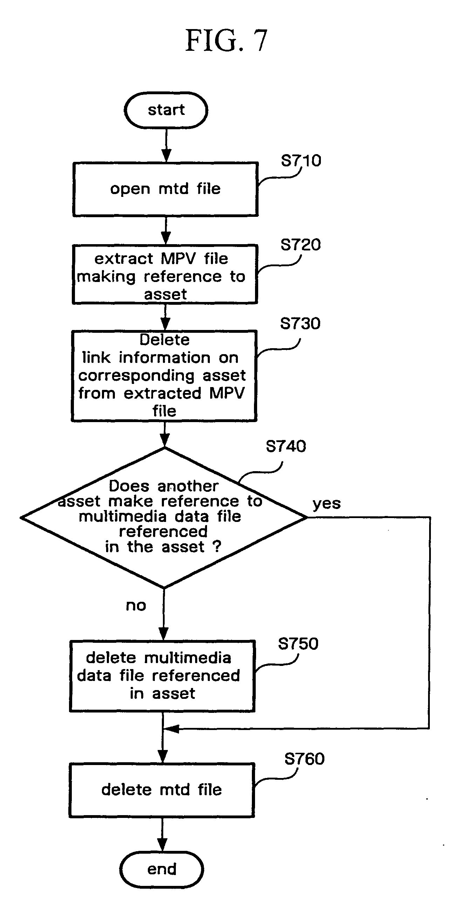

Figure 7 is a flowchart showing a process of deleting a link information file according to an exemplary embodiment of the present invention.

If a user intends to delete the asset_2 from the "albumB", the user opens the "sams0001.mtd" file including a file name (sams0001) of multimedia data referred to by the asset_2 (S710). After that, the "albumB.pvm" file making reference to the asset_2 is extracted (S720), and link information on the asset_2 is deleted from the extracted "albumB.pvm" file(S730).

Also, it is determined whether the "sams0001.jpg" file or the "sams0001.wav" file referred to by the asset_2 are referenced in another asset (S740). Herein, since the "sams0001.jpg" file is referred to by the asset_1 of the "albumA", "the "sams0001.jpg" file is not deleted. However, the "sams0001.mtd" file is deleted (S760). Additionally, when software is designed, a corresponding multimedia data file can be deleted without conditions even though another asset makes reference to the same multimedia data file. Sequentially, if another asset does not make reference to the "sams0001.jpg" file or the "sams001.wav" file referred to by the asset_2, the 'sams0001.jpg' file or the "sams0001.wav" file may be deleted (S750). Then, the "sams0001.mtd" file may be deleted (S760).

Meanwhile, if a user intends to delete the asset_1 in the "albumA" and not the asset_2, the "sams0001.jpg" file referred to by the asset_1 is not deleted because the "sams0001.jpg" file is referred to by an asset having "mpv_id=bark()" in the asset_2 of the "albumB".

According to the present invention, a user can consistently and effectively manage multimedia objects including at least one multimedia data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for managing multimedia data comprising:
allowing a user to access a multimedia object including at least one multimedia data file;
checking a reference relation of the multimedia data file if the multimedia object is deleted; and
deleting the multimedia data file if the multimedia data file is referenced only by the multimedia object, or maintaining the multimedia data file if the multimedia file is referred to by another object as well as the multimedia object.

2. The method of claim 1, wherein the reference relation is represented by file identification information for identifying files making reference to the multimedia object and object identification information for identifying the multimedia object.

3. The method of claim 1 or 2, wherein the reference relation is represented by a structured file.

4. The method of claim 1, 2 or 3, wherein the multimedia data comprises at least one of image data, audio data, video data, and text data.

5. A method for managing multimedia data comprising:
allowing a user to access a multimedia object including at least one multimedia data file;
changing information regarding the multimedia object; and
updating a reference relation of the multimedia data file using changed information.

6. The method of claim 5, wherein the information includes object identification information for identifying the multimedia object.

7. The method of claim 5 or 6, wherein the reference relation is represented by file identification information for identifying files making reference to the multimedia object and object identification information for identifying the multimedia object.

8. The method of claim 5, 6 or 7, wherein the reference relation is represented by a structured file.

9. The method of claim 5, 6, 7 or 8, wherein the multimedia data comprises at least one of image data, audio data, video data, and text data.

10. A method for managing multimedia data comprising:
creating a multimedia object including at least one multimedia data; and
adding information regarding the multimedia object to a reference relation of the multimedia data file if the multimedia data file is referred to by another multimedia object as well as the created multimedia object.

11. The method of claim 10, wherein the information includes object identification information for identifying the multimedia object.

12. The method of claim 10 or 11, wherein the reference relation is represented by file identification information for identifying files making reference to the multimedia object and object identification information for identifying the multimedia object.

13. The method of claim 10, 11 or 12, wherein the reference relation is represented by a structured file.

14. The method of claim 10, 11, 12 or 13, wherein the multimedia data comprises at least one image data, audio data, video data, and text data.

15. A method for managing multimedia data comprising:
creating a multimedia object including at least one multimedia data; and
creating a file for recording reference relation of the multimedia data file if the multimedia data file is referred to by another multimedia object as well as the multimedia object.

16. The method of claim 15, wherein the reference relation is represented by file identification information for identifying files making reference to the multimedia object and object identification information for identifying the multimedia object.

17. The method of claim 15 or 16, wherein the reference relation is represented by a structured file.

18. The method of claim 15, 16 or 17, wherein the multimedia data comprises at least one of image data, audio data, video data, and text data.
